Europäisches Patentamt

European Patent Office

Office européen des brevets

(11) Numéro de publication: **0 036 453**
**B1**

(12) **FASCICULE DE BREVET EUROPEEN**

(45) Date de publication du fascicule du brevet: **29.08.84**

(51) Int. Cl.³: **F 03 B 13/08**

(21) Numéro de dépôt: **80200268.3**

(22) Date de dépôt: **24.03.80**

(54) Centrale hydro-électrique de faible puissance préassemblée.

(43) Date de publication de la demande:
**30.09.81 Bulletin 81/39**

(45) Mention de la délivrance du brevet:
**29.08.84 Bulletin 84/35**

(84) Etats contractants désignés:
**AT BE CH DE FR GB IT LU NL SE**

(56) Documents cités:
**DE-C- 131 199**
**DE-C- 720 851**
**DE-C- 721 716**
**FR-A- 716 038**
**FR-A-1 111 601**
**FR-A-2 378 957**
**FR-A-2 413 565**

(73) Titulaire: **ATELIERS DE CONSTRUCTIONS ELECTRIQUES DE CHARLEROI (ACEC) Société Anonyme**
**Avenue Lloyd George 7**
**B-1050 Bruxelles (BE)**

(72) Inventeur: **Boutique, Gérard**
**Rue Sacré, 24**
**B-6110 Montigny-le-Tilleul (BE)**

Courier Press, Leamington Spa, England.

EP 0 036 453 B1

## Description

L-alimentation en énergie électrique de communautés isolées fait souvent appel à des installations hydrauliques, convertissant l'énergie potentielle de l'eau en énergie hydroélectrique.

La plupart de ces installations sont disposées "au fil de l'eau", le long des rivières, torrents et fleuves.

Les grandes installations hydroélectriques comportent des barrages importants, réalisant la retenue d'eau nécessaire, avec la dénivellation qui assurera l'alimentation des turbines.

Cette technique de barrages, appliquée à de petites installations isolées s'avère souvent prohibitive en coût de génie civil, compte tenu de la relativement faible quantité d'énergie électrique produite annuellement.

D'autre part, dans le brevet DE 131 199 une turbine hydraulique à axe vertical est montée dans une conduite circulaire d'eau placée verticalement et associée par une bride d'assemblage à une canalisation amenant l'eau à la partie supérieure de la conduite. L'eau s'écoule alors au travers du distributeur et de la roue de turbine, montés tous deux au niveau d'un rétrécissement interne de la conduite, et s'échappe ensuite au bas de la conduite par des trous répartis sur toute la périphérie de la conduite. Ces trous périphériques peuvent être partiellement ou totalement obstrués par une couronne extérieure à la conduite commandée par un dispositif monté sur la partie supérieure de cette conduite. Sur la partie supérieure de la conduite est également monté un train d'engrenages faisant office de renvoi d'angles pour transmettre un couple, selon un axe horizontal à une machine extérieure dont la vitesse de rotation peut être réglée selon le degré d'ouverture de la couronne extérieure.

L'ecoulement périphérique, s'effectuant au bas de la conduite, ne permet pas d'ancrer celle-ci dans le sol et de l'utiliser comme élément de barrage dans un cours d'eau.

La présente invention remédie aux inconvénients précités; elle consiste à utiliser une ou plusieurs unités de petites dimensions, préfabriquées ou préassemblées un usine pour constituer, sur site, un barrage facilement implanté, capable d'alimenter en énergie de petites communautés isolées.

Chacune de ces unités comporte une infrastructure de construction légère, appelée par la suite citerne, et pouvant être réalisée en une seule pièce ou en plusieurs éléments superposés. Le citerne de cette unité est équipée d'une turbine hydraulique à axe vertical qui, par l'intermédiaire d'un train d'engrenages multiplicateur de vitesse, actionne un générateur électrique de faible encombrement. Puisque chaque unité, à savoir le citerne et son équipement. hydro-électrique forme, après assemblage un ensemble compact facile à transporter, l'installation sur site n'exige pas une qualification particulière de la main d'oeuvre locale.

Selon la largeur du cours d'eau, le barrage peut être fait à l'aide d'une ou de plusieurs citernes ancrées côte à côte.

Selon les besoins locaux en énergie électrique, les citernes utilisées pour faire le barrage ne sont pas nécessairement toutes nanties d'un équipement hydro-électrique; elles constituent en quelque sorte une réserve rapidement aménagée en cas d'accroissement de besoins.

La présente invention sera détaillée à l'aide des figures suivantes.

La figure 1 est une coupe partielle d'une vue en élévation de l'installation.

La figure 2 est une vue en plan d'une élément de barrage.

la figure 3 illustre un barrage réalisé à l'aide de plusieurs éléments juxtaposés.

La figure 4 est une coupe partielle en élévation d'un autre exemple d'exécution;

La figure 5 est une vue en plan de cette dernière exécution.

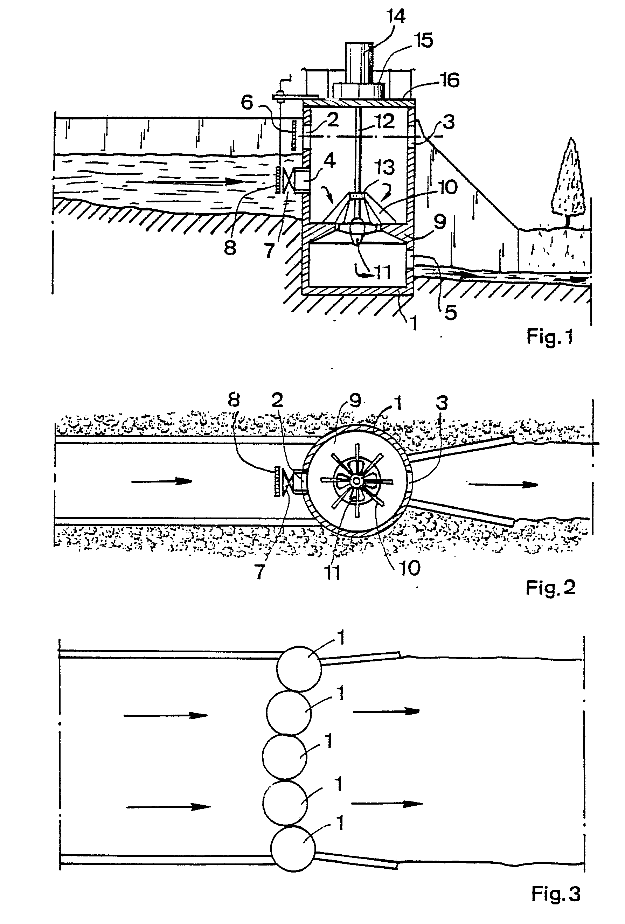

Dans la figure 1, l'élément de barrage est une citerne cylindrique (1) présentant plusieurs ouvertures (2, 3, 4 et 5). Deux ouvertures "hautes" (2 et 3) diamétralement opposées sont pratiquées dans la partie supérieure de la citerne (1) et servent à l'évacuation des crues. Ces ouvertures (2 et 3) sont disposées selon l'axe du cours d'eau et l'ouverture "haute" (2) placée côté amont, est protégée par un grillage (6) retenant les objets flottants en période de crue. Dans la partie médiane de la citerne (1) une ouverture "amont" (4) est pratiquée sous l'ouverture "haute" (2) et assure l'amenée normale de l'eau. Cette ouverture "amont" (4) est munie d'une organe d'isolement (7) et est protégée par une grille mobile (8).

Dans la partie inférieure de la citerne (1) une ouverture "aval" (5) sert à l'écoulement des eaux turbinées.

A l'intérieur de la citerne (1), à un niveau intermédiaire entre celui déterminé par l'ouverture "amont" (4) et celui déterminé par l'ouverture "aval" (5) est ménagée un rétrécissement (9) surmonté d'un distributeur (10) dont les aubes directrices sont profilées conformément à la loi d'écoulement recherchée pour utiliser au mieux les caractéristiques d'une turbine hydraulique (11). Un axe vertical (12), guidé par un palier (13) solidaire du distributeur (10) relie la turbine hydraulique (11) à un générateur électrique (14) par l'intermédiaire d'un engrenage multiplicateur de vitesse (15).

Le générateur électrique (14) et le train d'engrenages multiplicateur de vitesse (15) sont montés sur un couvercle (16) qui ferme la citerne (1) et sont protégés par une enveloppe étanche à l'eau et à la poussière.

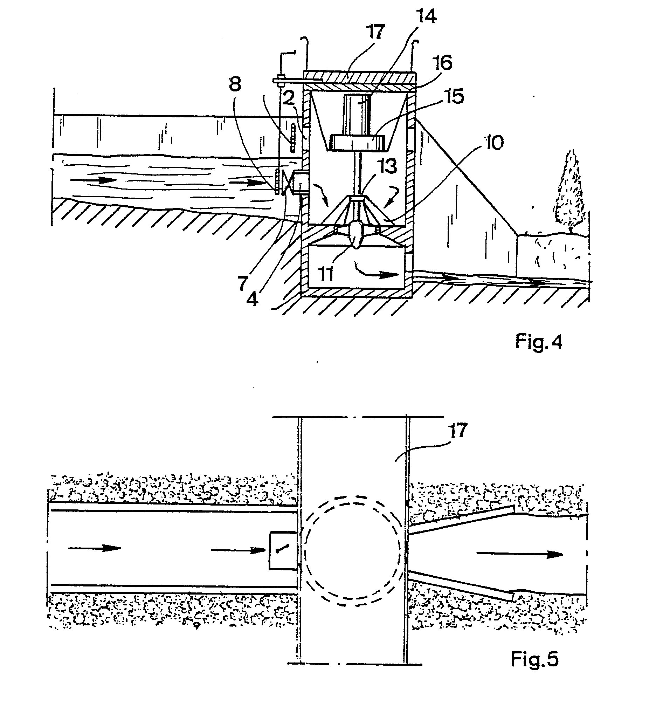

Un autre exemple de réalisation est repris dans les figures 4 et 5.

Dans cet exemple d'exécution, la citerne (1) utilisée comme élément de barrage peut aussi servir d'assise pour un construction de génie civil telle qu'un petit pont (17). Le générateur (14) et le multiplicateur de vitesse (15) étant placés sous le couvercle (16) pour permettre la pose du tablier du point sans sur élévation supplémentaire.

## Revendications

1. Installations hydro-électrique comportant une turbine à axe vertical (11) montée à l'intérieur d'une citerne préfabriquée (1) réalisée en une seule pièce ou en plusieurs éléments superposés, munie d'un couvercle (16) sur lequel est fixé un train d'engrenages (15) et un arbre (12) reliant la fite turbine (11) à un générateur électrique (14), d'une ouverture "amont" (4) et d'une ouverture "aval" (5), situées de part et d'autre d'un rétrécissement intérieur (9) de la citerne (1) pour servir de support à un distributeur (10) alimentant la dite turbine (11) et disposées de façon à obliquer l'eau à passer à travers la turbine (11) en entrant par l'ouverture "amont" (4) et en sortant par l'ouverture "aval" (5), caractérisée en ce que la dite citerne préfabriquée (1) est ancrée dans un cours d'eau de manière à forme un barrage pour que l'eau pénètre dans la citerne (1) par l'ouverture "amont" (4) située dans la partie médiane de la citerne (1),

en ce que la citerne préfabrique (1) est nantie à sa partie supérieure de deux ouvertures (2 et 3) opposées, appelées ouvertures "hautes", disposées selon l'axe du cours d'eau et servant à l'évacuation des crues.

et en ce que le train d'engrenages fixé au couvercle (16) est un train multiplicateur de vitesse (15) entraînement le générateur électrique (14) également fixé au couvercle (16) de la citerne (1).

2. Installation hydro-électrique selon la revendication précédente, caractérisée en ce que le rétrécissement intérieur (9) sert de support à un palier (13) dans lequel tourne l'arbre (12), reliant la turbine (11) au générateur (14).

3. Installation hydro-électrique selon une des revendications précédentes caractérisée en ce que le générateur électrique (14) et le train d'engrenages multiplicateur de vitesse (15) sont placés dans une enveloppe étanche à l'eau et à la poussière.

4. Installation hydro-électrique selon une des revendications précédentes, caractérisée en ce que la turbine hydraulique à axe vertical (11), le générateur électrique (14) et le train d'engrenages multiplicateur de vitesse (15) sont incorporés à la citerne préfabriquée (1), en usine, pour former un ensemble facile à transporter, à installer et à entretenir.

5. Installation hydro-électrique selon une des revendications précédentes, caractérisée en ce que l'ouverture "amont" (4) de la citerne préfabriquée (1) est équipée d'un organe d'obturation (7) et d'une grille mobile (8).

6. Installation hydro-électrique selon une des revendications précédentes, caractérisée en ce que plusieurs citernes (1) sont ancrées côte-à-côte pour constituer un barrage sur un cours d'eau et en ce que au moins une des citernes (1) est équipée d'une turbine hydraulique (11), d'un multiplicateur de vitesse (15) et d'un générateur électrique (14).

7. Installation hydro-électrique selon la revendication 6, caractérisée en ce que les citernes sont ancrées côte-à-côte pour former un barrage disposé en arc de cercle et présentant le côté concave vers l'aval du cours d'eau.

8. Installation hydro-électrique selon la revendication 2, caractérisée en ce que l'ouverture "haute" (2) pratiquée côté amont à la partie supérieure de la citerne préfabriquée (1) est protégée par un grillage (6).

9. Installation hydro-électrique selon une des revendications précédentes, caractérisée en ce que au moins une citerne préfabriquée (1) constituant le barrage sert d'assise pour un autre ouvrage de génie civil.

## Patentansprüche

1. Hydroelektrische Anlage, umfassend eine Turbine mit vertikaler Achse (11), die im Inneren eines vorgefertigten Tanks (1) montiert ist, der aus einem einzigen Teil oder aus mehreren, übereinander angeordneten Elementen verwirklicht ist und mit einem Deckel (16) versehen ist, auf dem eine Getriebeeinheit (15) und eine Welle (12) befestigt sind, die die besagte Turbine (11) mit einem elektrischen Generator (14) verbinden, und der eine stromaufwärts angeordnete Öffnung (4) und eine stromabwärts angeordnete Öffnung (5) aufweist, die zu beiden Seiten einer inneren Verengung (9) des Tanks (1) gelegen sind, die als Auflage für einen Verteiler (10) dient, der die besagte Turbine (11) versorgt, und die so angeordnet sind, daß das Wasser gezwungen wird, durch die Turbine (11) zu fließen, wobei es durch die stromaufwärts angeordnete Öffnung (4) eintritt und durch die stromabwärts angeordnete Öffnung (5) austritt, dadurch gekennzeichnet, daß der besagte vorgefertigte Tank (1) so in einem Wasserlauf verankert ist, daß ein Staudamm gebildet wird, damit das Wasser durch die in dem mittleren Teil des Tanks (1) gelegene, stromaufwärts angeordnete Öffnung (4) in den Tank (1) eindringt,

daß der vorgefertigte Tank (1) in seinem oberen Teil mit zwei einander gegenüberliegenden Öffnungen (2 und 3) versehen ist, die obere Öffnungen genannt werden, und die in Richtung des Wasserlaufs angeordnet sind und zur Ableitung von Hochwasser dienen,

und dadaß die an dem Deckel (16) befestigte Getriebeeinheit eine Übersetzungsgetriebeeinheit (15) ist, die den elektrischen Generator (14) antreibt, der ebenfalls an dem Deckel (16) des tanks (1) befestigt ist.

2. Hydroelektrische Anlage gemäß dem vorhergehenden Patentanspruch, dadurch gekennzeichnet, daß die innere Verengung (9) als Auflage für ein Lager (13) dient, in dem sich die Welle (12) dreht, die die Turbine (11) mit dem Generator (14) verbindet.

3. Hydroelektrisch Anlage gemäß einem der vorhergehenden Patentansprüche, dadurch gekennzeichnet, daß der elektrische .Generator (14) und die Übersetzungsgetriebeeinheit (15) in einer wasser- und staubdichten Umhüllung angeordnet sind.

4. Hydroelektrische Anlage gemäß einem der vorhergehenden Patentansprüche, dadurch gekennzeichnet, daß die hydraulische Turbine mit vertikaler Achse (11), der elektrische Generator (14) und die Übersetzungsgetriebeeinheit (15) im Herstellerwerk in den vorgefertigten Tank (1) eingebaut werden, damit eine Einheit erhalten wird, die leicht transportiert, installiert und gewartet werden kann.

5. Hydroelektrische Anlage gemäß einem der vorhergehenden Patentansprüche, dadurch gekennzeichnet, daß die stromaufwärts angeordnete Öffnung (4) des vorgefertigten Tanks (1) mit einem Verschlußorgan (7) und einem beweglichen Gitter (8) ausgerüstet ist.

6. Hydroelektrische Anlage gemäß einem der vorhergehenden Patentansprüche, dadurch gekennzeichnet, daß mehrere Tanks (1) nebeneinander verankert sind, um einen Staudamm in einem Wasserlauf zu bilden, und daß mindestens einer der Tanks (1) mit einer hydraulischen Turbine (11), einer Übersetzungsgetriebeeinheit (15) und einem elektrischen Generator (14) ausgerüstet ist.

7. Hydroelektrische Anlage gemäß Patentanspruch 6, dadurch gekennzeichnet, daß die Tanks nebeneinander verankert sind, um einen kreisbogenförmig angeordneten Staudamm zu bilden, dessen konkave Seite stromabwärts gerichtet ist.

8. Hydroelektrische Anlage gemäß Patentanspruch 2, dadurch gekennzeichnet, daß die obere Öffnung (2), die auf der stromaufwärts gerichteten Seite in dem oberen Teil des vorgefertigten tanks (1) angebracht ist, durch ein Gitter (6) geschützt wird.

9. Hydroelektrische Anlage gemäß einem der vorhergehenden Patentansprüche, dadurch gekennzeichnet, daß mindestens ein vorgefertigter Tank (1), der den Staudamm bildet, als Fundament für ein anderes technisches Bauwerk dient.

**Claims**

1. Hydro-electric installation comprising a turbine (11) with a vertical axis arranged within a prefabricated tank (1) made in one piece or from a plurality of superposed elements, provided with a cover (16) on which there are fixed a gearing (15) and a shaft (12) connecting the said turbine (11) to an electrical generator (14), with an "upstream" aperture (4) and a "downstream" aperture (5) these being situated at the two sides of a neck (9) provided within the tank (1) to serve as a support for a guide assembly or distributor (10) supplying the said turbine (11), said apertures being arranged so as to oblige the water to pass through the turbine (11) by entering through the "upstream" aperture (4) and issuing through the "downstream" aperture (5), characterised in that the said prefabricated tank (1) is anchored in a water course in such as way as to form a dam, so that the water enters the tank (1) through the "upstream" aperture (4) situated in the middle region of the tank (1),

in that the pre-fabricated tank (1) is provided at its upper portion with two opposite apertures (2 and 3) referred to as "upper" apertures, arranged axially of the water course and serving for discharging flood water, and in that the gearing fixed to the cover (16) is a step-up gearing (15) driving the electrical generator (14) also fixed to the cover (16) of the tank (1).

2. Hydro-electric installation according to the preceding claim, characterised in that the internal neck (9) serves as a support for a bearing (13) wherein there rotates the shaft (12) connecting the turbine (11) to the generator (14).

3. Hydro-electric installation according to one of the preceding claims, characterised in that the electric generator (14) and the step-up gearing (15) are situated in a casing which is sealing-tight to water and dust.

4. Hydro-electric installation according to one of the preceding claims, characterised in that the vertical-axis hydraulic turbine (11), the electrical generator (14) and the step-up gearing (15) are incorporated in the prefabricated tank (1) in the factory to form a unit which is easy to transport, to install and to maintain.

5. Hydro-electric installation according to one of the preceding claims, characterised in that the "upstream" aperture (4) of the prefabricated tank (1) is equipped with a shut-off device (7) and with a movable grid (8).

6. Hydro-electric installation according to one of the preceding claims, characterised in that a plurality of tanks (1) are secured side by side to constitute a dam across a water course, and in that at least one of the tanks (1) is equipped with a hydraulic turbine (11), a step-up gearing (15) and an electrical generator (14).

7. Hydro-electric installation according to claim 6, characterised in that the tanks are secured side by side to form a dam arranged in the form of an arc of a circle and with the concave side facing downstream relatively to the water course.

8. Hydro-electric installation according to claim 2, characterised in that the "upper" aperture (2) formed at the upstream side in the upper portion of the prefabricated tank (1) is protected by a grid (6).

9. Hydro-electric installation according to one of the preceding claims, characterised in that at least one prefabricated tank (1) constituting the dam serves as a support for another civil engineering structure.

0 036 453

Fig. 1

Fig. 2

Fig. 3

Fig. 4

Fig. 5